# FASCICULE DE BREVET EUROPEEN

(11) **EP 0 794 074 B1**
(45) Date de publication et mention de la délivrance du brevet: **11.12.2002**
(21) Numéro de dépôt: 97102379.1
(22) Date de dépôt: 14.02.1997
(51) Int. Cl.: B60C 23/04

(54) **Procédé d'exploitation des mesures de pression et de température dans un systéme de surveillance de pneumatiques**
Verfahren zur Auswertung von Druck- und Temperaturmessung in einer Reifendruck-Überwachungseinrichtung
Pressure and temperature evaluating method for a tyre surveillance device

(30) Priorité: 06.03.1996 FR 9603004
(43) Date de publication de la demande: 10.09.1997
(73) Titulaire: COMPAGNIE GENERALE DES ETABLISSEMENTS MICHELIN-MICHELIN & CIE, 63040 Clermont-Ferrand Cédex (FR)
(72) Inventeur: Meunier, André, 63370 Lempdes (FR)
(74) Mandataire: Dequire, Philippe Jean-Marie Denis

(56) Documents cités:
- EP-A- 0 221 522
- FR-A- 2 680 136

## Description

La présente invention se rapporte aux systèmes de surveillance des pneumatiques. Elle concerne la surveillance des évolutions de pression dues aux variations climatiques ou aux pertes naturelles et particulièrement la détermination précise des meilleures conditions pour effectuer cette surveillance.

Indépendamment de toute fuite accidentelle, il est bien connu que la pression de gonflage des pneumatiques varie sensiblement en raison des pertes naturelles ou des variations climatiques comme les changements de température extérieure d'une saison à l'autre.

C'est pourquoi les recommandations des manufacturiers des pneumatiques recommandent de vérifier régulièrement la pression de gonflage de ces pneumatiques « une fois toutes des deux semaines, à froid, c'est-à-dire une heure au moins après l'arrêt de la voiture ou après avoir parcouru deux à trois kilomètres à faible allure » dans le cas de véhicules de tourisme (Guide Rouge Michelin, 1996).

Lorsqu'un véhicule est équipé d'un système centralisé de surveillance des pneumatiques, comment effectuer cette surveillance des pertes naturelles ? Le brevet FR-A-2 680 136 montre le préambule de la revendication 1 et propose de considérer que l'état des pneumatiques est froid lorsque l'écart maximal entre les températures de l'air interne de ces pneumatiques et une température de référence mesurée dans le véhicule est inférieur à 6°C. Cette méthode présente l'inconvénient de nécessiter au moins cinq capteurs de température en parfait état parce que toute dérive de mesure entre ces capteurs est susceptible de fausser la détermination précise de cet état froid des pneumatiques.

L'invention a pour objet un procédé d'exploitation des signaux dans un système de surveillance des pneumatiques d'un véhicule permettant notamment la surveillance des pertes naturelles ou climatiques basé sur une détermination de l'état chaud ou froid des pneumatiques qui ne présente pas ces contraintes.

Dans ce qui suit, on entend par :
- «température ambiante» le résultat d'une mesure de température de l'air environnant réalisée par un capteur de température situé dans le véhicule ;
- « température d'environnement d'un pneumatique » le résultat d'une mesure de température réalisée par un capteur de température situé dans l'environnement immédiat du pneumatique, par exemple, fixé à la jante ou au disque de roue ;
- « système de surveillance des pneumatiques » un système comportant pour chaque pneumatique un module électronique de mesure de la pression de gonflage ainsi que de la température d'environnement avec des moyens de transmission des signaux de mesure à une unité centrale de traitement de ces signaux placée dans le véhicule ; cette unité centrale reçoit aussi des signaux de mesure de température ambiante et est reliée à des moyens d'alerte du conducteur du véhicule ;
- « temps d'arrêt du système de surveillance » : le temps s'écoulant entre une mise hors circuit du système par, par exemple, action du conducteur du véhicule sur la clé de contact, et la réalimentation du système par l'action inverse du conducteur.

Le procédé selon l'invention exploite les signaux d'un système délivrant une mesure de température ambiante et pour chaque pneumatique au moins une mesure de la pression de gonflage dudit pneumatique et une mesure de température dans l'environnement dudit pneumatique, et est tel que :
- à chaque arrêt du système, on garde en mémoire non volatile au moins une mesure de température d'environnement pour chaque pneumatique ;
- à chaque mise en route du système, on compare le temps d'arrêt du système relativement à un temps critique lui-même variable en fonction des valeurs des températures mémorisées lors de l'arrêt du système ;
- si le temps d'arrêt est supérieur ou égal audit temps critique, on effectue un contrôle de la pression de gonflage desdits pneumatiques qu'on enregistre dans un mode dit à froid puis on bascule dans un mode de contrôle à chaud ;
- si le temps d'arrêt est inférieur audit temps critique, on bascule immédiatement dans un mode de contrôle à chaud.

Ce procédé de détermination de l'état froid des pneumatiques est donc basé sur la comparaison entre le temps d'arrêt du système et un temps critique de refroidissement des pneumatiques et de leurs environnements. Mais, la mémorisation des températures ambiante et d'environnement des pneumatiques lors de l'arrêt du système permet d'identifier si le véhicule a été utilisé avant son arrêt dans des conditions normales ou sévères de roulage, avec un freinage intensif ou non. Cette identification est très avantageuse car elle permet d'ajuster la durée du temps critique de refroidissement en fonction des conditions réelles de roulage et ainsi d'améliorer sensiblement les conditions de détermination de cet état chaud ou froid.

Ce procédé peut avantageusement utiliser les écarts entre la température ambiante et les températures d'environnements des pneumatiques mémorisées lors de l'arrêt du système. L'amplitude de ces écarts est notablement plus importante que la mesure des mêmes écarts lors du redémarrage du système, il en résulte une détermination plus fiable et plus robuste que celle proposée par le brevet FR-A-2 680 136.

Dans son mode de mise en oeuvre le plus simple, on peut choisir entre deux valeurs de temps critique en fonction de la valeur de l'écart maximal entre la température ambiante et les différentes températures d'environnements des pneumatiques observées. Lorsque cet écart maximal est inférieur à une température donnée, on peut considérer que les conditions de roulage étaient normales et qu'une durée de refroidissement de l'ordre de 90 mn en tourisme, ou de 4 heures en poids lourd est tout à fait satisfaisante pour obtenir un bon équilibre thermique entre les pneumatiques et leurs environnement.

Lorsque l'écart maximal de température devient supérieur au seuil précédent, on peut considérer qu'il est nécessaire pour obtenir cet équilibre thermique d'augmenter sensiblement la durée de refroidissement en raison du fort échauffement dans l'environnement des pneumatiques observé.

La valeur exacte du ou des seuils est à déterminer expérimentalement en fonction de chaque véhicule et du lieu d'implantation exact des modules de roues.

Après avoir déterminé un état froid des pneumatiques, le système de surveillance effectue un contrôle à froid des pneumatiques dans lequel, au moins :
- on mesure la pression de gonflage de chaque pneumatique ;
- on calcule l'écart algébrique entre la pression de gonflage mesurée de chaque pneumatique et sa pression nominale ;
- on calcule la moyenne de ces écarts algébriques ; et
- on déclenche une alarme lorsque la valeur absolue de cette moyenne dépasse un seuil S₁ donné.

Avantageusement, ce contrôle est complété par les étapes suivantes :
- on stocke en mémoire non volatile la valeur de cette moyenne pour établir une série des N valeurs successives correspondant aux N derniers contrôles à froid effectués par le système ;
- on déclenche une alarme lorsque ces N valeurs sont de même signe et ont majoritairement leur valeur absolue supérieure à un seuil S₂ donné.

Alors que les seuils d'alerte de pression de gonflage, pneumatique par pneumatique, sont de l'ordre de 0,3 bar en tourisme ou de 1 bar en poids lourd, les seuils S₁ peuvent être plus réduits à 0,2 bar et 0,8 bar et les seuils S₂ encore plus : 0,15 et 0,5 bar. Cette surveillance permet ainsi de garantir en permanence des pressions de gonflage correctes pour l'ensemble des pneumatiques. Ce point est particulièrement critique lorsque les points de fonctionnement (charge/pression) des pneumatiques sont situés à la limite des valeurs minimales de pression requises par l'Organisation Technique Européenne du Pneumatique et de la Jante (ETRTO).

Bien entendu, le contrôle à froid peut aussi comprendre les comparaisons classiques des pressions de gonflage pneumatique par pneumatique ainsi que la surveillance des écarts entre les pneumatiques d'un même essieu.

Enfin, le contrôle à chaud des pneumatiques comporte avantageusement ces mêmes comparaisons des pressions de gonflage pneumatique par pneumatique, la surveillance des écarts entre les pneumatiques d'un même essieu ainsi que la surveillance de la variation dans le temps de ces écarts entre pneumatiques d'un même essieu ou de plusieurs essieux.

Pour mettre en oeuvre le procédé de l'invention, on peut utiliser un dispositif de surveillance tel que présenté dans le brevet US-A-4 703 650 avec un module électronique de mesure de pression par roue transmettant par couplage inductif les signaux de mesure à une unité centrale disposée dans le véhicule et reliée elle-même à un dispositif d'affichage à proximité du conducteur. On peut aussi utiliser un dispositif transmettant par radio les mêmes informations à une unité centrale similaire.

## Revendications

1. Procédé d'exploitation des signaux dans un système de surveillance des pneumatiques d'un véhicule, ledit système délivrant une mesure de température ambiante et pour chaque pneumatique au moins une mesure de la pression de gonflage dudit pneumatique et une mesure de température dans l'environnement dudit pneumatique, ce procédé est **caractérisé par** les étapes suivantes :
- à chaque arrêt du système, on garde en mémoire non volatile au moins une mesure de température ambiante ainsi qu'une mesure de température d'environnement pour chaque pneumatique ;
- à chaque mise en route du système, on compare le temps d'arrêt du système relativement à un temps critique lui-même variable en fonction des valeurs des températures mémorisées lors de l'arrêt du système ;
- si le temps d'arrêt est supérieur ou égal audit temps critique, on effectue un contrôle de la pression de gonflage desdits pneumatiques qu'on enregistre dans un mode dit à froid puis on bascule dans un mode de contrôle à chaud ;
- si le temps d'arrêt est inférieur audit temps critique, on bascule immédiatement dans un mode de contrôle à chaud.

2. Procédé selon la revendication 1, dans lequel on détermine la valeur du temps critique en fonction des écarts des températures ambiante et d'environnements des pneumatiques mémorisées lors de l'arrêt du système.

3. Procédé selon la revendication 2, dans lequel on choisit comme valeur du temps critique une première valeur donnée lorsque l'écart maximal entre les températures ambiante et d'environnements des pneumatiques est inférieur à un seuil donné.

4. Procédé selon la revendication 3, dans lequel on choisit comme valeur du temps critique une seconde valeur donnée, supérieure à la première, lorsque l'écart maximal entre les températures ambiante et d'environnements des pneumatiques est supérieur à un seuil donné.

5. Procédé selon l'une des revendications 1 à 4, dans lequel le contrôle à froid comprend au moins les étapes suivantes :
- on mesure la pression de gonflage de chaque pneumatique ;
- on calcule l'écart algébrique entre la pression de gonflage mesurée de chaque pneumatique et sa pression nominale ;
- on calcule la moyenne pour l'ensemble des pneumatiques de ces écarts algébriques ; et
- on déclenche une alarme lorsque la valeur absolue de cette moyenne dépasse un seuil S₁ donné.

6. Procédé selon la revendication 5, dans lequel le contrôle à froid comprend en plus les étapes suivantes :
- on stocke en mémoire non volatile la valeur de cette moyenne pour établir une série des N valeurs successives correspondant aux N derniers contrôles à froid effectués par le système ;
- on déclenche une alarme lorsque ces N valeurs sont de même signe et ont majoritairement leur valeur absolue supérieure à un seuil S₂ donné.

## Patentansprüche

1. Verfahren zur Auswertung der Signale in einem System zur Überwachung der Reifen eines Fahrzeugs, wobei das System eine Umgebungstemperaturmessung und für jeden Reifen mindestens eine Messung des Aufpumpdrucks des genannten Reifens sowie eine Temperaturmessung in der Umgebung des genannten Reifens liefert, und wobei dieses Verfahren **dadurch gekennzeichnet ist, daß**
- man bei jedem Halt des Systems in einem nichtflüchtigen Speicher mindestens eine Temperaturmessung der Umgebung für jeden Reifen behält;
- man bei jeder Inbetriebnahme des Systems die Zeit des Halts des Systems mit einer kritischen Zeit vergleicht, die ihrerseits in Funktion der Temperaturwerte veränderlich ist, die während des Halts des Systems gespeichert waren;
- man dann, wenn die Zeit des Halts größer ist als die genannte, kritische. Zeit oder gleich dieser ist, eine Kontrolle des Aufpumpdrucks der genannten Reifen bewirkt, die man in einer Betriebsart, die in kaltem Zustand genannt ist, auszeichnet und dann in eine Kontroll-Betriebsart bei warmem Zustand umschaltet; und
- man dann, wenn die Zeit des Halts kürzer ist als die genannte, kritische Zeit, unmittelbar in eine Betriebsart bei warmem Zustand umschaltet.

2. Verfahren nach Anspruch 1, worin man den Wert der kritischen Zeit in Funktion von den Abweichungen der Umgebungstemperatur und der Temperaturen der Umgebung der Reifen bestimmt, die während des Halts des Systems eingespeichert wurden.

3. Verfahren nach Anspruch 2, worin man als Wert der kritischen Zeit einen ersten, gegebenen Wert wählt, wenn die maximale Abweichung zwischen der Umgebungstemperatur und den Temperaturen der Umgebung der Reifen kleiner ist als ein gegebener Schwellenwert.

4. Verfahren nach Anspruch 3, worin man als Wert der kritischen Zeit einen zweiten, gegebenen Wert wählt, der höher ist als der erste, wenn die maximale Abweichung zwischen der Umgebungstemperatur und den Temperaturen der Umgebungen der Reifen größer ist als ein gegebener Schwellenwert.

5. Verfahren nach einem der Ansprüche 1 bis 4, in dem die Kontrolle bei kaltem Zustand mindestens die folgenden Schritte aufweist:
- man mißt den Aufpumpdruck eines jeden Reifens;
- man berechnet die algebraische Abweichung zwischen dem gemessenen Aufpumpdruck eines jeden Reifens und seinem Nenndruck;
- man berechnet für die Gesamtheit der Reifen den Mittelwert dieser algebraischen Abweichungen; und
- man löst einen Alarm aus, wenn der Absolutwert dieses Mittelwertes einen gegebenen Schwellenwert S₁ überschreitet.

6. Verfahren nach Anspruch 5, worin die Kontrolle in kaltem Zustand außerdem die folgenden Schritte umfaßt:
- man speichert im nicht-flüchtigen Speicher den Wert dieses Mittelwertes, um eine Reihe von N aufeinanderfolgenden Werten einzurichten, die den letzten N Kontrollen in kaltem Zustand entsprechen, die durch das System durchgeführt wurden; und
- man löst einen Alarm aus, wenn diese N Werte dasselbe Vorzeichen haben und überwiegend mit ihrem Absolutwert über einem gegebenen Schwellenwert S₂ liegen.

## Claims

1. A method for processing the signals in a system for monitoring the tyres of a vehicle, said system supplying an ambient-temperature measurement and, for each tyre, at least one measurement of the inflation pressure of said tyre and a temperature measurement in the region surrounding said tyre; this method is **characterised by** the following steps:
- upon each shutdown of the system, at least one ambient-temperature measurement and a surroundings temperature measurement for each tyre is stored in a non-volatile memory;
- upon each start-up of the system, the down-time of the system is compared to a critical time which in turn is variable as a function of the values of the temperatures stored upon shutdown of the system;
- if the down-time is greater than or equal to said critical time, the inflation pressure of said tyres is checked and recorded in what is called a "cold" mode, then a switch is made into a hot checking mode;
- if the down-time is less than said critical time, an immediate switch is made into a hot checking mode.

2. A method according to Claim 1, in which the value of the critical time is determined as a function of the deviations in the ambient and surroundings temperatures of the tyres which were stored upon shutdown of the system.

3. A method according to Claim 2, in which a first given value is selected as the value of the critical time when the maximum deviation between the ambient and surroundings temperatures of the tyres is less than a given threshold.

4. A method according to Claim 3, in which a second given value, greater than the first, is selected as the value of the critical time when the maximum deviation between the ambient and surroundings temperatures of the tyres is greater than a given threshold.

5. A method according to one of Claims 1 to 4, in which the cold checking comprises at least the following stages:
- the inflation pressure of each tyre is measured;
- the algebraic deviation between the measured inflation pressure of each tyre and its rated pressure is calculated;
- the average of these algebraic deviations is calculated for all the tyres, and
- an alert is triggered when the absolute value of this average exceeds a given threshold S₁.

6. A method according to Claim 5, in which the cold checking furthermore comprises the following stages:
- the value of this average is stored in a non-volatile memory to establish a series of the N successive values corresponding to the last N cold checks effected by the system;
- an alert is triggered when these N values are of the same sign and a majority of them have their absolute value greater than a given threshold S₂.
